# EUROPÄISCHE PATENTANMELDUNG

(11) **EP 1 262 668 A1**
(43) Veröffentlichungstag der Anmeldung: **04.12.2002**
(21) Anmeldenummer: 01112696.8
(22) Anmeldetag: 25.05.2001
(51) Int. Cl.: F16B 13/00

(54) **Selbstbohrdübel**

(71) Anmelder: ALLFA DÜBEL GmbH, D-45899 Gelsenkirchen (DE)
(72) Erfinder: Tkocz, Horst, 45899 Gelsenkirchen (DE); Kempkes, Dieter, 45899 Gelsenkirchen (DE)
(74) Vertreter: Rohmann, Michael, Dr.

(57) **Zusammenfassung**

Selbstbohrdübel, insbesondere zum Einbringen in poröses und/oder bröckeliges Material, wobei ein Basiskörper vorgesehen ist und wobei der Basiskörper einen eine dübelinnenseitige Axialöffnung umgebenden Basiskörpermantel aufweist. An der Außenoberfläche des Basiskörpermantels ist ein Außengewinde angeformt. Der Basiskörpermantel bildet dübelvorderseitig eine kreisförmige scharfkantige Schneide.

## Beschreibung

Die Erfindung betrifft einen Selbstbohrdübel, insbesondere zum Einbringen in poröses und/oder bröckeliges Material. - Selbstbohrdübel meint, dass der Dübel ohne Vorbohren eines Bohrloches unmittelbar in eine Wand eingebracht bzw. eingedreht werden kann. Dabei kann als Eindrehhilfe ein Werkzeug benutzt werden, das dabei mit dem Selbstbohrdübel in Wechselwirkung steht. Hierbei kann es sich beispielsweise um einen Schraubendreher oder aber auch um eine Bohrmaschine mit entsprechendem Bohrvorsatz handeln. Der erfindungsgemäße Selbstbohrdübel ist insbesondere für ein Einbringen in poröses oder bröckeliges Material geeignet. Bei solchen Materialien besteht stets das Problem, einen ausreichenden Halt des Dübels in dem Material sicherzustellen. Bei porösem und/oder bröckeligem Material kann es sich vor allem um Material auf der Basis von Gips, Schaumstoffen oder Gasbeton handeln. - Nach dem Einbringen eines Selbstbohrdübels in das jeweilige Material kann dann ein Befestigungselement, insbesondere eine Befestigungsschraube in die Axialöffnung des Selbstbohrdübels eingebracht werden und auf diese Weise wird das Befestigungselement bzw. die Schraube in der Wand mittels des Selbstbohrdübels sicher fixiert.

Selbstbohrdübel sind aus der Praxis in verschiedenen Ausführungsformen bekannt. Diese bekannten Selbstbohrdübel weisen aber in der Regel eine Reihe von Nachteilen auf. So ist das Einbringen vieler bekannter Selbstbohrdübel in eine Wand oft nur mit erheblichem Kraftaufwand möglich. Ein funktionssicheres zentriertes und geradliniges Einbringen des Dübels in die Wand ist oftmals nicht gewährleistet. Die meisten Selbstbohrdübel zeichnen sich auch durch den Nachteil aus, dass beim Einbringen bzw. beim Eindrehen in die Wand relativ viel Material von der Wand abbröckelt. Dies gilt einerseits für die Vorderseite der Wand, von der aus der Dübel eingebracht wird und andererseits in der Regel auch für die Rückseite der Wand, aus der der Selbstbohrdübel aufgrund seiner Länge oftmals herausragt. Das ist jedenfalls normalerweise bei Bauplatten aus Gips oder Gasbeton oder dergleichen der Fall. Bei dem bekannten Selbstbohrdübel wird an dieser Rückseite der Wand in der Umgebung der Dübelspitze häufig ein relativ großer Wandbereich herausgebrochen. Das Abbröckeln und Herausbrechen von Material führt natürlich dazu, dass der Halt des Selbstbohrdübels in der Wand verschlechtert wird.

Demgegenüber liegt der Erfindung das technische Problem zugrunde, einen Selbstbohrdübel der eingangs genannten Art anzugeben, mit dem die vorstehend beschriebenen Nachteile vermieden werden und der sich einfach und funktionssicher in eine Wand einbringen lässt und sich durch einen sehr festen Halt in dieser Wand auszeichnet.

Zur Lösung dieses technischen Problems lehrt die Erfindung einen Selbstbohrdübel, insbesondere zum Einbringen in poröses und/oder bröckeliges Material,
wobei ein Basiskörper vorgesehen ist und wobei der Basiskörper einen eine dübelinnenseitige Axialöffnung umgebenden Basiskörpermantel aufweist,
wobei an der Außenoberfläche des Basiskörpermantels ein Außengewinde angeformt ist
und wobei der Basiskörpermantel dübelvorderseitig eine kreisförmige scharfkantige Schneide bildet. - Bei dem Selbstbohrdübel handelt es sich um einen sogenannten selbstschneidenden Dübel. Die kreisförmige Schneide wird auf die Wand, in die der Dübel eingebracht werden soll, aufgesetzt und dann wird der Selbstbohrdübel zweckmäßigerweise mit Hilfe eines geeigneten Eindrehwerkzeuges in die Wand eingedreht. Dabei schneidet sich das Außengewinde in die Wand ein.

Es liegt im Rahmen der Erfindung, dass die kreisförmige scharfkantige Schneide an der Vorderseite bzw. an der Stirnseite des Basiskörpermantels in einer Ebene liegt, die senkrecht oder im Wesentlichen senkrecht zu der Längsachse des Selbstbohrdübels angeordnet ist. Mit anderen Worten ist die kreisförmige scharfkantige Vorderkante der Schneide in der Ebene angeordnet, die senkrecht oder im Wesentlichen senkrecht zu der Längsachse des Selbstbohrdübels orientiert ist. Vorzugsweise ist der gesamte Kreisumfang der Schneide bzw. der Vorderkante der Schneide in der Ebene angeordnet, die senkrecht oder im Wesentlichen senkrecht zu der Längsachse des Selbstbohrdübels liegt.

Nach bevorzugter Ausführungsform bestehen sowohl der Basiskörper als auch das Außengewinde des Selbstbohrdübels aus Metall. Zweckmäßigerweise besteht der gesamte Selbstbohrdübel aus Metall.

Vorzugsweise verjüngt sich der Basiskörper zur Vorderseite des Dübels hin konisch. Mit anderen Worten verringert sich nach dieser Ausführungsform der Kerndurchmesser des Dübels von der Rückseite des Dübels zur Vorderseite hin. Zweckmäßigerweise nimmt der Durchmesser des Basiskörpers bzw. der Kerndurchmesser von der Rückseite des Dübels zur Vorderseite des Dübels um 10 bis 20 % ab. - Vorzugsweise verjüngt sich auch der Durchmesser des Außengewindes zum Vorderende des Dübels hin, so dass auch die Außenkontur des Außengewindes eine konische Form aufweist.

Es liegt im Rahmen der Erfindung, dass die dübelinnenseitige Axialöffnung zumindest über einen Teilbereich ihrer Länge kreuzschlitzförmig ausgebildet ist. Eine kreuzschlitzförmige Ausbildung der Axialöffnung ist zweckmäßigerweise an der Rückseite des Dübels vorgesehen. Die kreuzschlitzförmige Ausbildung der Axialöffnung ist vor allem für ein Ansetzen eines Eindrehwerkzeuges zum Einbringen des Dübels in eine Wand geeignet. An der kreuzschlitzförmigen Axialöffnung kann ein Schrauben- bzw. Kreuzschraubendreher oder eine Bohrmaschine mit entsprechendem Bohrvorsatz angesetzt werden. - Zweckmäßigerweise ist an der Dübelrückseite ein Flansch vorgesehen. Es liegt im Rahmen der Erfindung, dass der Flansch zur Axialöffnung hin eingewölbt ist. Der Flansch an der Dübelrückseite erleichtert ein funktionssicheres Einbringen des Dübels in eine Wand und dient unter anderem auch zur effektiven Abstützung eines Eindrehwerkzeuges.

Der Basiskörper bzw. der Basiskörpermantel läuft an der Dübelvorderseite erfindungsgemäß in die dünnwandige scharfkantige Schneide aus. Nach sehr bevorzugter Ausführungsform der Erfindung weist die dübelvorderseitige Schneide des Basiskörpermantels eine Manteldicke von 0,005 bis 0,02 mm auf. Die Manteldicke des Basiskörpermantels beträgt an der Schneide beispielsweise 0,01 mm. - Bezüglich eines Dübelabschnitts mit einer Länge von 8 mm, gemessen von der Vorderkante der Schneide aus, reduziert sich die Manteldicke des Basiskörpermantels zur Schneide hin vorzugsweise auf weniger als die Hälfte, bevorzugt auf weniger als 1/4, sehr bevorzugt auf weniger als 1/5 der Manteldicke im Abstand von 8 mm von der Vorderkante der Schneide.

Es liegt im Rahmen der Erfindung, dass das Außengewinde des erfindungsgemäßen Selbstbohrdübels als ein scharfgängiges selbstschneidendes Außengewinde ausgebildet ist. Dabei weist das Außengewinde zweckmäßigerweise einen messerartigen Gewindegang auf. Das Außengewinde hat bevorzugt eine relativ große Gewindesteigung von 4 bis 8 mm, vorzugsweise von 5 bis 7 mm. Das Verhältnis des Außendurchmessers des Außengewindes zum Kerndurchmesser des Basiskörpers beträgt vorzugsweise zumindest 1,5 oder ist größer als 1,5.

Nach sehr bevorzugter Ausführungsform, der im Rahmen der Erfindung ganz besondere Bedeutung zukommt, beginnt der Gewindegang des Außengewindes an der scharfkantigen Schneide. Dabei liegt es im Rahmen der Erfindung, dass der Gewindegang unmittelbar an der Schneide beginnt oder dass der Ganganfang lediglich einen Abstand von 1 bis 3 mm, vorzugsweise von 1 bis 2 mm von der Vorderkante der Schneide hat. Die Ganghöhe des Gewindeganges steigt zweckmäßigerweise vom Ganganfang aus allmählich an.

Nach sehr bevorzugter Ausführungsform der Erfindung weist die dübelinnenseitige Axialöffnung einen zur Dübelvorderseite offenen Aufnahmeabschnitt für die Aufnahme von Wandmaterial auf, das beim Einbringen des Selbstbohrdübels frei wird. Dieser Aufnahmeabschnitt weist zweckmäßigerweise einen kreisförmigen Querschnitt auf und ist beispielsweise insgesamt zylinderförmig ausgebildet. Der Aufnahmeabschnitt kann sich zur Dübelrückseite hin auch konisch verjüngen. Zweckmäßigerweise weist die Axialöffnung im Bereich des Aufnahmeabschnittes keine kreuzschlitzförmige Ausbildung oder irgendwelche innenseitigen Profilierungen auf. Es liegt im Rahmen der Erfindung, dass der Basiskörpermantel im Bereich des Aufnahmeabschnittes dübelinnenseitig glattwandig ausgebildet ist. Die Länge des Aufnahmeabschnittes beträgt vorzugsweise 7 bis 15 mm. Der Aufnahmeabschnitt hat sich im Rahmen eines funktionssicheren Einbringens des erfindungsgemäßen Selbstbohrdübels in eine Wand besonders bewährt. In dem Aufnahmeabschnitt kann beim Einbringen des Selbstbohrdübels abbröckelndes Material funktionssicher aufgenommen werden und auf diese Weise wird das Einbringen des erfindungsgemäßen Dübels beträchtlich erleichtert. Nach Beendigung des Einbringens des Selbstbohrdübels in eine Wand befindet sich in dem Aufnahmeabschnitt normalerweise ein Pfropfen von zerbröckeltem Wandmaterial.

Der Erfindung liegt die Erkenntnis zugrunde, dass ein erfindungsgemäßer Selbstbohrdübel auf verhältnismäßig einfache und wenig aufwändige Weise, insbesondere mit überraschend wenig Kraftaufwand in eine Wand aus porösem und/oder bröckeligem Material einbringbar ist. Der erfindungsgemäße Selbstbohrdübel kann überraschend geradlinig in eine Wand eingebracht werden. Bei diesem Einbringen bzw. Eindrehen findet ein Abbröckeln von Wandmaterial weder von der Vorderseite der Wand noch von der Rückseite der Wand in nennenswertem Umfang statt. Hervorzuheben ist auch, dass der erfindungsgemäße Selbstbohrdübel, der die geschilderten beachtlichen Vorteile aufweist, nichtsdestoweniger auf relativ einfache und kostengünstige Weise herstellbar ist.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines erfindungsgemäßen Selbstbohrdübels,
- Fig. 2: einen Schnitt durch den Aufnahmeabschnitt des Selbstbohrdübels und
- Fig. 3: eine Ansicht aus Richtung des Pfeiles A.

In den Figuren ist ein erfindungsgemäßer Selbstbohrdübel dargestellt, der vor allem zum Einbringen in poröses und/oder bröckeliges Material geeignet ist. Der Selbstbohrdübel hat einen Basiskörper 1, der einen eine dübelinnenseitige Axialöffnung 2 umgebenden Basiskörpermantel 3 aufweist. An der Außenoberfläche des Basiskörpermantels 3 ist ein Außengewinde 4 angeformt. Der Basiskörpermantel 3 bildet dübelvorderseitig eine kreisförmige scharfkantige Schneide 5. Die kreisförmige Schneide 5 bzw. die Vorderkante dieser Schneide 5 liegt im Ausführungsbeispiel in einer Ebene, die senkrecht zur Dübellängsachse 6 angeordnet ist.

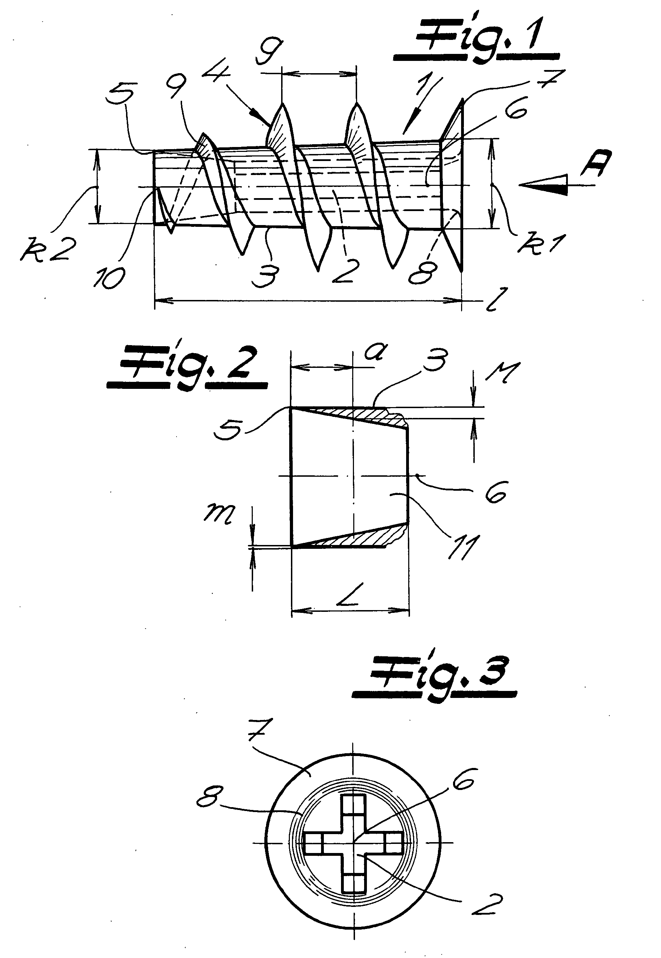

In Fig. 1 ist erkennbar, dass sich der Basiskörper 1 zur Vorderseite des Dübels hin konisch verjüngt. Mit anderen Worten nimmt der Kerndurchmesser k von der Rückseite des Dübels zur Vorderseite des Dübels hin ab. Der flanschseitige Kerndurchmesser k1 beträgt vorzugsweise 6 bis 10 mm und im Ausführungsbeispiel 8 mm. Der schneidenseitige Kerndurchmesser k2 beträgt zweckmäßigerweise 5 bis 9 mm und im Ausführungsbeispiel 6,8 mm. Die Länge 1 des erfindungsgemäßen Selbstbohrdübels liegt bevorzugt zwischen 24 und 32 mm und beträgt im Ausführungsbeispiel 28 mm.

Die dübelinnenseitige Axialöffnung 2 ist über einen Teilbereich ihrer Länge kreuzschlitzförmig ausgebildet. Das ist in der Fig. 3 erkennbar und in der Fig. 1 angedeutet worden. Die kreuzschlitzförmige Ausbildung der Axialöffnung 2 erleichtert das Ansetzen eines nicht dargestellten Eindrehwerkzeuges, beispielsweise eines Kreuzschraubendrehers. Durch entsprechenden Formschluss mit der Spitze eines solchen Kreuzschraubendrehers kann der Selbstbohrdübel einfach und funktionssicher in eine Wand eingedreht werden. - An der Dübelrückseite ist im Übrigen ein Flansch 7 vorgesehen, der zur Axialöffnung 2 hin eingewölbt ausgebildet ist. Die Wölbung 8 ist in den Fig. 1 und 3 erkennbar.

Vor allem in der Fig. 2 ist schematisch dargestellt worden, dass der Basiskörpermantel 3 an der Dübelvorderseite in die dünnwandige scharfkantige Schneide 5 ausläuft. Diese dübelvorderseitige Schneide 5 des Basiskörpermantels 3 weist vorzugsweise eine Manteldicke von 0,005 bis 0,02 mm auf. Im Ausführungsbeispiel beträgt diese Manteldicke m der Schneide 0,01 mm. In Fig. 2 ist erkennbar, dass in einem Abstand a von der Vorderkante der Schneide 5 die Manteldicke M verwirklicht ist. Der Abstand a beträgt im Ausführungsbeispiel 8 mm und die Manteldicke M beträgt 0,4 mm.

Das Außengewinde 4 des erfindungsgemäßen Selbstbohrdübels ist als scharfgängiges selbstschneidendes Außengewinde 4 ausgebildet (Fig. 1). Die Gewindesteigung g beträgt vorzugsweise 4 bis 8 mm und im Ausführungsbeispiel 6 mm.

In der Fig. 1 ist erkennbar, dass der Gewindegang 9 des Außengewindes 4 an der scharfkantigen Schneide 5 beginnt. Dieser Ganganfang 10 kann auch einen geringfügigen Abstand von der Vorderkante der Schneide 5 aufweisen, beispielsweise etwa 1 mm. Die Ganghöhe steigt vom Ganganfang 10 aus allmählich an.

Vorzugsweise und im Ausführungsbeispiel weist die dübelinnenseitige Axialöffnung 2 einen zur Dübelvorderseite offenen Aufnahmeabschnitt 11 auf. Beim Einbringen bzw. Eindrehen des Selbstbohrdübels in eine Wand kann in diesem Aufnahmeabschnitt 11 Wandmaterial aufgenommen werden. Über die Länge des Aufnahmeabschnittes 11 ist eine kreuzschlitzförmige Ausbildung der Axialöffnung 2 nicht verwirklicht.

Der Aufnahmeabschnitt 11 weist vorzugsweise und im Ausführungsbeispiel einen kreisförmigen Querschnitt auf. Fernerhin verjüngt sich hier die Innenkontur des Aufnahmeabschnittes 11 von der Dübelvorderseite zur Dübelrückseite hin konisch. Der Aufnahmeabschnitt 11 kann aber auch zylinderförmig ausgebildet sein. Vorzugsweise beträgt die Länge L des Aufnahmeabschnittes 11 7 bis 15 mm und im Ausführungsbeispiel 12 mm.

## Patentansprüche

1. Selbstbohrdübel, insbesondere zum Einbringen in poröses und/oder bröckeliges Material,
wobei ein Basiskörper (1) vorgesehen ist und wobei der Basiskörper (1) einen eine dübelinnenseitige Axialöffnung (2) umgebenden Basiskörpermantel (3) aufweist,
wobei an der Außenoberfläche des Basiskörpermantels (3) ein Außengewinde (4) angeformt ist
und wobei der Basiskörpermantel (3) dübelvorderseitig eine kreisförmige scharfkantige Schneide (5) bildet.

2. Selbstbohrdübel nach Anspruch 1, wobei der Basiskörper (1) und das Außengewinde (4) aus Metall bestehen.

3. Selbstbohrdübel nach einem der Ansprüche 1 oder 2,
wobei sich der Basiskörper (1) zur Vorderseite des Dübels hin konisch verjüngt.

4. Selbstbohrdübel nach einem der Ansprüche 1 bis 3,
wobei die dübelinnenseitige Axialöffnung (2) zumindest über einen Teilbereich ihrer Länge kreuzschlitzförmig ausgebildet ist.

5. Selbstbohrdübel nach einem der Ansprüche 1 bis 4,
wobei an der Dübelrückseite ein Flansch (7) vorgesehen ist.

6. Selbstbohrdübel nach einem der Ansprüche 1 bis 5,
wobei die dübelvorderseitige Schneide (5) des Basiskörpermantels (3) eine Manteldicke von 0,005 bis 0,02 mm aufweist.

7. Selbstbohrdübel nach einem der Ansprüche 1 bis 6,
wobei der Gewindegang (9) des Außengewindes (4) an der scharfkantigen Schneide (5) beginnt.

8. Selbstbohrdübel nach einem der Ansprüche 1 bis 7,
wobei die dübelinnenseitige Axialöffnung (2) einen zur Dübelvorderseite offenen Aufnahmeabschnitt (11) zur Aufnahme von Wandmaterial aufweist.
